# EUROPEAN PATENT SPECIFICATION

(11) **EP 3 328 110 B1**
(45) Date of publication and mention of the grant of the patent: **25.08.2021**
(21) Application number: 15882465.6
(22) Date of filing: 01.12.2015
(51) Int. Cl.: H04W 16/02, H04W 72/04

(54) **METHOD OF USING SPECTRUM RESOURCE OF ORTHOGONAL FREQUENCY DIVISION MULTIPLEXING SYSTEM, AND CORRESPONDING BASE STATION**
VERFAHREN ZUR VERWENDUNG EINER SPEKTRUMSRESSOURCE EINES ORTHOGONALEN FREQUENZMULTIPLEXSYSTEMS UND ENTSPRECHENDE BASISSTATION
PROCÉDÉ D'UTILISATION D'UNE RESSOURCE DE SPECTRE D'UN SYSTÈME DE MULTIPLEXAGE PAR RÉPARTITION ORTHOGONALE DE LA FRÉQUENCE, ET STATION DE BASE CORRESPONDANTE

(30) Priority: 17.07.2015 CN 201510425540
(43) Date of publication of application: 30.05.2018
(73) Proprietor: ZTE Corporation, Shenzhen, Guangdong 518057 (CN)
(72) Inventor: WANG, Jicheng, Shenzhen Guangdong 518057 (CN)
(74) Representative: Ligi, Stefano
(86) International application number: PCT/CN2015/096141
(87) International publication number: WO 2016/131326

(56) References cited:
- EP-A1- 1 355 450
- EP-A1- 2 139 256
- EP-A1- 2 190 126
- EP-A1- 2 568 717
- EP-A1- 2 806 686
- WO-A1-2015/052691
- CN-A- 101 558 608
- CN-A- 103 748 822
- CN-A- 104 126 328
- GB-A- 2 370 170
- GB-A- 2 507 277
- US-A1- 2013 059 594

## Description

### TECHNICAL FIELD

The present disclosure relates to, but not limited to, a wireless communication system.

### BACKGROUND

Wireless communication is a communication manner of performing information exchange by virtue of a characteristic that an electromagnetic wave signal may be propagated in a free space, and provides fast and convenient communication means for people. A typical application of wireless communication is that some fixed transceivers, which may be called as base stations, are deployed to provide communication connections for numerous mobile transceivers, i.e. terminals, in a wireless manner. The fixed base stations may be connected with telecommunication or data wired networks, and then the terminals may be connected to the large-range telecommunication or data networks through the base stations to implement mutual communication, or communication with the fixed terminals or access to Internet services.

In order to ensure establishment of a connection between two parties participating in wireless communication, the two parties are required to follow predefined wireless specifications, including a wireless frequency for receiving and transmitting over the air, a modulation technology, a data coding format, a related communication control command and the like.

A mobile cellular communication network widely used at present is a type of wireless communication, and generally, a related organization of the International Telecommunication Union (ITU) defines a globally applicable frequency band and technology and publishes a corresponding International standard to enable a mobile terminal consistent with a protocol specification to roam between different countries.

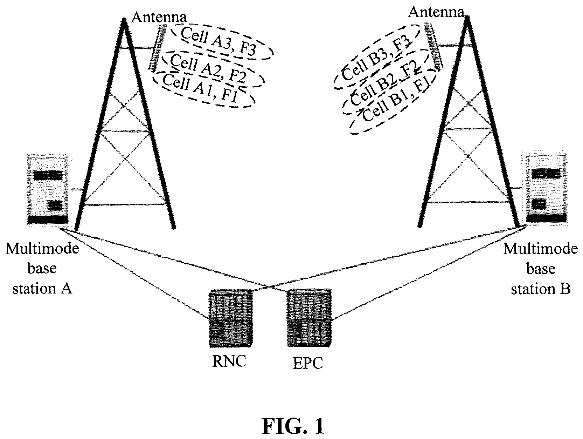

An operating company of a mobile cellular communication network is required to apply a wireless spectrum supervision department for spectrum resources, and may only obtain spectrum resources of a finite frequency bandwidth. In order to construct a higher-capacity network and provide more user service, the mobile communication network usually adopts a cellular space diversity manner and multiplexes the spectrum resources in different geographic regions. Base station equipment of the mobile cellular communication network may all use multiple antennae to implement wireless coverage for the geographic regions, and a region covered by each antenna may be called as a sector. Multiple frequency carriers may also be deployed in each sector in a frequency diversity manner. Each access carrier of each sector may be called as a cell, and is an access point of a mobile terminal in the network. A structure of the mobile cellular communication network is shown in FIG. 1.

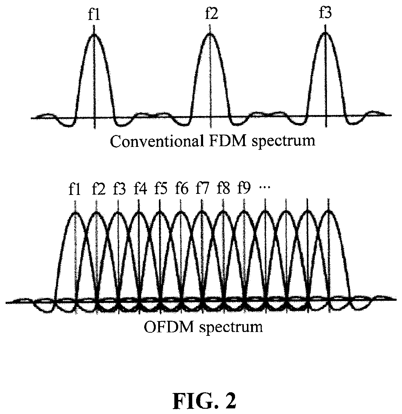

In a development process, a mobile cellular communication network experiences stages of a Frequency Division Multiple Access (FDMA) technology represented by an Advanced Mobile Phone System (AMPS) and a Total Access Communication System (TACS), a Time Division Multiple Access (TDMA) technology represented by a Global System for Mobile Communications (GSM), a Code Division Multiple Access technology represented by a Universal Mobile Telecommunications System (UMTS) and the like, and has been evolved into an Orthogonal Frequency Division Multiplexing (OFDM) technology represented by Long Term Evolution (LTE), where the OFDM technology is also used for wireless communication of Wireless Fidelity (WiFi), World Interoperability for Microwave Access (WiMAX), Bluetooth and the like. The OFDM technology modulates data by virtue of mutually orthogonal subcarriers, as shown in FIG. 2, and may have higher spectrum utilization efficiency than a conventional Frequency Division Multiplexing (FDM) technology. A frequency bandwidth of each subcarrier is relatively smaller, a symbol regulation rate is relatively lower, inter-symbol interference is effectively reduced, and enough subcarriers may be used in parallel to increase an overall transmission rate. A wireless communication system adopting the OFDM technology has a frequency division scheduling capability, and may allocate different subcarriers to different users.

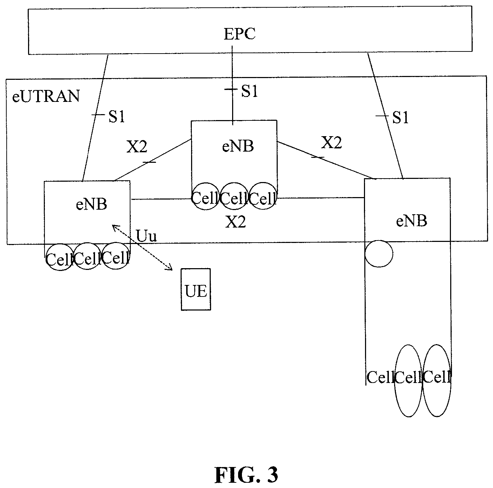

LTE is an LTE system relative to a UMTS, also belongs to an International Mobile Telecommunications (IMT) standard protocol family, is established by the 3rd Generation Partnership Project (3GPP), and is started to be introduced from a protocol Release 8 (R8). LTE is an Evolved Packet Core (EPC)-based access network, i.e. an Evolved UMTS Terrestrial Radio Access Network (eTRAN). A logical structure of an LTE system is shown in FIG. 3.

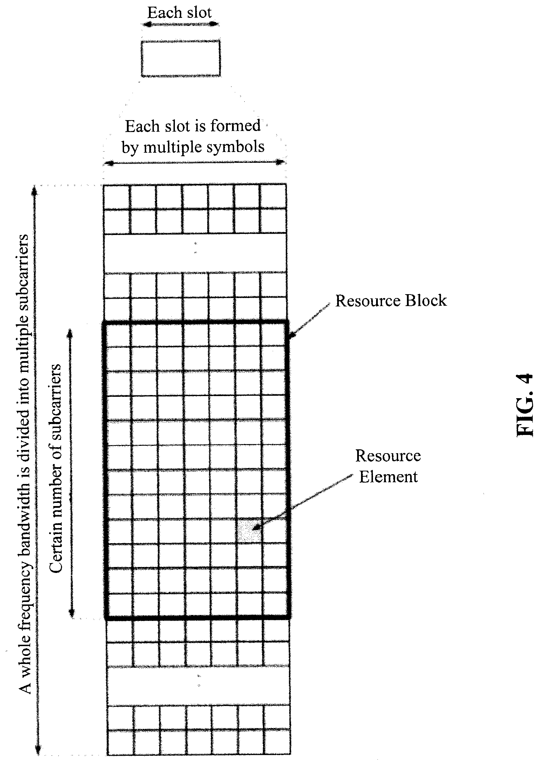

LTE flexibly allocates resources on a frequency domain and a time domain based on an OFDM technology by adopting 15KHz as a subcarrier frequency bandwidth, 10ms as a radio frame and 1ms as a subframe and a Transmission Time Interval (TTI) scheduling period. As shown in FIG. 4, an 1ms subframe of each subcarrier may include 2 slots, and each slot includes 6 to 7 modulation symbols. A symbol on each subcarrier is defined as a Resource Element (RE), and is a minimum unit for frequency-time domain resource allocation of LTE. A resource of which 12 frequency-continuous subcarriers last for a slot is defined as a Resource Block (RB). An LTE Evolved Node B (eNB) may allocate resources to different users to schedule data transmission by taking an RB as a granularity. An RB defined in a physical layer is also called as a Physical Resource Block (PRB), and each PRB occupies 180KHz on the frequency domain.

Based on the abovementioned definitions about the frequency-time domain resources, an LTE cell defines different types of downlink channels and frequency-time domain resources used for each channel.

### (I) Synchronization channel

A Primary Synchronization Signal (PSS) and a Secondary Synchronization Signal (SSS) are included, and are configured for a terminal to capture cell synchronization information during initial cell searching, and each 10ms radio frame is transmitted twice. On the time domain, a PSS of a Frequency Division Duplex (FDD) LTE cell is located on last OFDM symbols of first and eleventh slots of each radio frame, and an SSS is directly located before the PSS. On the frequency domain, the PSS and the SSS are mapped into 62 center subcarriers of the LTE cell for transmission. PSSs and SSSs of different cells use different numerical value sequences, and 168 SSS sequences and 3 PSS sequences may be combined to represent 504 different Physical Cell Identifiers (PCIs).

### (II) Physical Broadcast Channel (PBCH)

A PBCH is a Broadcast Channel (BCH) arranged to bear a configuration and operating information of another channel of a cell. The PBCH is transmitted after a PSS on a first slot, and uses 72 center subcarriers of the cell, only appears on first four symbols of a second slot of a radio frame, and is repeated every 40ms. In such a manner, a terminal may scan a synchronization signal of the cell and identify a center frequency of the cell to read PBCH information on the premise of not knowing about a frequency bandwidth of the cell.

### (III) Cell-specific Reference Signal (CRS)

According to a definition of the 3GPP, an LTE cell must transmit a CRS on a specific symbol of each slot of a specific subcarrier, and its location is related to an antenna port number. For example, for locations of CRSs at a first antenna port, the CRSs appear on first and fifth symbols of each slot on the time domain, and on the frequency domain, the CRS on the first symbol appears on first and seventh subcarriers of each PRB, and the CRS on the fifth symbol appears on fourth and tenth subcarriers of each PRB.

A CRS is mainly configured for three purposes: channel estimation for coherent demodulation of a downlink physical channel, capturing of channel state information and CRS measurement as a basis for cell selection and handover. A CRS value sequence generation and mapping mechanism is defined in detail in a 3GPP standard protocol TS36.201.

### (IV) Physical Control Format Indicator Channel (PCFICH)

A PCFICH is arranged to indicate a number of symbols used by a Physical Downlink Control Channel (PDCCH) in each radio subframe, which may be 1, 2 or 3. A PCFICH of each LTE cell is divided into four segments, four REs of each segment form a Resource Element Group (REG), each REG occupies four continuous subcarriers (an RE occupied by a CRS is required to be spaced), and only a first symbol of each subframe is used. The four REGs of the PCFICH are uniformly distributed on the whole bandwidth, so that a location of the PCFICH on the frequency domain is related to a frequency bandwidth of the cell.

### (V) Physical Hybrid Automatic Repeat Request (ARQ) Indicator Channel (PHICH)

A PHICH is configured for uplink transmission ARQ response signaling, which may be an Acknowledgement (ACK) or a Negative Acknowledgement (NACK). Multiple PHICHs are mapped onto the same group of REs to form a PHICH group. Each PHICH group is divided into three segments, four REs of each segment form a REG, each REG occupies symbols, at the same locations, of four continuous subcarriers (an RE occupied by a CRS is required to be spaced), usually a first symbol of each subframe. Three REGs of each PHICH group are uniformly distributed on the whole bandwidth, so that a location of the PHICH on the frequency domain is related to the frequency bandwidth of the cell. Each cell is configured with at least one group of PHICHs, and may also be configured with multiple groups of PHICHs.

### (VI) Physical Downlink Shared Channel (PDCCH)

A PDCCH transmits resource allocation signaling of one or a group of terminals, and uses first 1, 2 or 3 symbols of each subframe, and a number of practically used symbols is defined by a PCFICH mapped onto the subframe. In first 1, 2 or 3 symbols of each subframe, all frequency-time domain resources except frequency-time domain resources occupied by a CRS, a PCFICH and a PHICH may be configured for PDCCH transmission.

### (VII) Physical Downlink Shared Channel (PDSCH)

A PDSCH is a downlink channel, bearing user data, of an LTE cell, and takes an RB as a basic transmission unit. Except the reference signal and control channels defined above, other symbols of each RB may all be configured for PDSCH transmission.

An LTE cell may use a flexible wireless bandwidth, and standard frequency bandwidths defined by the 3GPP include 1.4MHz, 3MHz, 5MHz, 10MHz, 15MHz, 20MHz and the like. A frequency bandwidth used by each LTE cell is notified to a terminal in broadcast control information of the cell, and the terminal may demodulate a wireless signal for data transmission on the whole frequency bandwidth according to the information. When spectrum resources possessed by an operating company of a mobile cellular communication network are not equal to the frequency bandwidths defined by the 3GPP standard, the whole spectrum may be divided into multiple carriers based on a standard frequency bandwidth, and each carrier forms a cell. An LTE system further defines a function Carrier Aggregation (CA) of combining different carriers for use, and a terminal may simultaneously perform data transmission on multiple cells of different carriers, so that a peak throughput is increased.

Document EP 2139256A1 discloses a method that one of sequence groups each specifying reference signal sequences for respective radio resource bandwidths is assigned to a base station and a different one of the sequence groups is assigned to a neighboring cell.

Document GB 2507277 solve problems of throughput reduction due to collisions, busy medium, and deferred transmission due to overlapping wireless networks (e.g. IEEE 802.11 overlapping basic service sets, OBSS) by allowing devices suffering from overlapping interference to have sufficient chances to transmit and/or receive successfully.

Document GB2370170 discloses a signal distribution system comprising a plurality of rf transmitters for serving a plurality of network cells. The system comprises a multiplexer coupled to the transmitters for multiplexing the transmitter outputs, a signal transporter for transporting the multiplexed signals to each of the network cells, and a multiplexed signal receiver at each cell for selecting and receiving a signal from a transmitter serving the cell.

Document EP28066686 discloses a coordination method. The coordination method includes determining a signal processing scheme for a user according to whether the signal processing scheme of the user requires coordination; and indicating to the user the signal processing scheme through user-oriented signal-ing.

### SUMMARY

The invention is captured in the attached claims.

The below is a summary about a theme described in the disclosure in detail. The summary is not intended to limit the scope of protection of the claims.

Although multiple frequency bandwidths are defined for an LTE cell, may be combined for use and may be flexibly deployed under different spectrum resource conditions, each frequency bandwidth and combinations thereof are still limited, and spectrum resources possessed by an operating company may still not be fully utilized in many scenarios. Dividing a limited frequency bandwidth into relatively smaller sub-frequency bandwidths for combination may also influence a peak rate of a terminal not supporting a CA function.

The features of the method and base station according to the present invention are defined in the independent claims, and the preferable features according to the present invention are defined in the dependent claims.

According to the solutions, the first cell and the second cell are deployed respectively based on the two frequency bands which have the standard frequency bandwidths supporting access of a universal terminal and are partially overlapped to form an overlapped frequency band, wherein the two frequency bands are obtained by dividing a whole frequency band possessed by an operating company, and wherein, and wherein the two frequency bands are partially overlapped such that a total frequency bandwidth of the first and second frequency bands matches with a width of the whole frequency band of the operating company; on the overlapped frequency band, the data of the first cell and the second cell is scheduled in the united manner, and the frequency-time domain resources are allocated. Therefore, the spectrum resources of the OFDM system may be fully utilized, deployment of the OFDM system under any frequency bandwidth condition is supported, and the operating company may almost utilize the whole possessed frequency bandwidth.

After the drawings and the detailed descriptions are read and understood, the other aspects may be comprehended.

### BRIEF DESCRIPTION OF DRAWINGS

FIG. 1 is a structure diagram of a mobile cellular communication network;
FIG. 2 is a schematic diagram of an OFDM modulation technology;
FIG. 3 is a schematic diagram of a logical structure of an LTE system;
FIG. 4 is a schematic diagram of radio resource allocation of LTE adopting an OFDM multiple access technology;
FIG. 5 is a flowchart of a method according to an embodiment of the disclosure; and
FIG. 6 is a module diagram of a base station according to an embodiment of the disclosure.

### DETAILED DESCRIPTION

Implementation modes of the disclosure will be described below in combination with the drawings in detail. It is important to note that embodiments in the disclosure and characteristics in the embodiments may be freely combined without conflicts.

An embodiment of the disclosure provides a method for utilizing spectrum resources of an OFDM system. The OFDM system may be, for example, an LTE system or a subsequent evolved system, for example, an LTE-Advance (LTE-A) system, of the LTE system and a 5th-Generation (5G) system, and may also be another OFDM system.

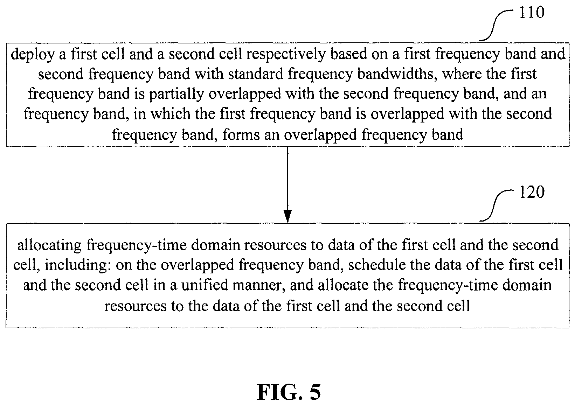

As shown in FIG. 5, the method of the embodiment includes the following steps.

In Step 110, a first cell and a second cell are deployed respectively based on a first frequency band and second frequency band with standard frequency bandwidths, the first frequency band is partially overlapped with the second frequency band, and an frequency band in which the first frequency band is overlapped with the second frequency band forms an overlapped frequency band,
where a center frequency point of each of subcarriers of the first cell is aligned with a center frequency point of a corresponding subcarrier of the second cell on the overlapped frequency band.

Optionally, a frequency bandwidth of the overlapped frequency band is equal to a frequency bandwidth of N RBs, where an RB is a minimum unit for resource allocation to users, and N is a positive integer.

In the step, the first frequency band and the second frequency band may be obtained by dividing a whole frequency band possessed by an operating company, and the whole frequency band possessed by the operating company may be divided into at least two or three frequency bands with standard frequency bandwidths, where the at least two or three frequency bands include the first frequency band and the second frequency band.

When a number of divided frequency bands, the standard frequency bandwidths and the frequency bandwidth of the overlapped frequency band are selected, one or more of the following manners may be considered to avoid a resource conflict:
the number of the divided frequency bands, the standard frequency bandwidths and the frequency bandwidth of the overlapped frequency band are selected to make subcarrier resources allocated, according to a resource allocation manner specified by the OFDM system, to at least one of a synchronization channel or a PBCH of the first cell be different from that of the second cell; and
the number of the divided frequency bands, the standard frequency bandwidths and the frequency bandwidth of the overlapped frequency band are selected to make allocation of the frequency-time domain resources on the overlapped frequency band according to the resource allocation manner specified by the OFDM system meet one or more of the following conditions:
   a frequency-time domain resource allocated to PCFICH of the first cell is not overlapped with a frequency-time domain resource allocated to PCHFICH of the second cell,
   a frequency-time domain resource allocated to PHICH of the first cell is not overlapped with a frequency-time domain resource allocated to PHICH of the second cell,
   the frequency-time domain resource allocated to the PHICH of the first cell is not overlapped with the frequency-time domain resource allocated to the PCFICH of the second cell, and
   the frequency-time domain resource allocated to the PCFICH of the first cell is not overlapped with the frequency-time domain resource allocated to the PHICH of the second cell.

In the step, when the first cell and the second cell are deployed respectively based on the first frequency band and second frequency band with the standard frequency bandwidths according to a relationship between a PCI and a location of a CRS symbol, PCIs of the first cell and the second cell may be set to make locations of CRS symbols of the first cell and the second cell in overlapped subcarriers be the same. Because a CRS occupies more frequency-time domain resources, the PCIs of the two cells are set, as mentioned above, then frequency-time domain resources of CRSs of the first cell and the second cell may be the same, and influence of occupation of excessive resources on transmission of other data is avoided.

In Step 120, frequency-time domain resources are allocated to data of the first cell and the second cell, including that: on the overlapped frequency band, the data of the first cell and the second cell is scheduled in a united manner, and the frequency-time domain resources are allocated.

In the step, the action that the frequency-time domain resources are allocated to the data (including user data, control channel data, the CRSs and the like) of the first cell and the second cell may further include that:
on the frequency band of the first frequency band other than the overlapped frequency band, the data of the first cell is scheduled, and a frequency-time domain resource is allocated to the data of the first cell; and
on the frequency band of the second frequency band other than the overlapped frequency band, the data of the second cell is scheduled, and a frequency-time domain resource is allocated to the data of the second cell.

Where, for the action that, on the overlapped frequency band, the data of the first cell and the second cell is scheduled in the united manner and the frequency-time domain resources are allocated to the data of the first cell and the second cell, one or more of the following scheduling manners may be adopted:
on the overlapped frequency band, user data of the first cell and the second cell is scheduled in the united manner to share a frequency-time domain resource of PDSCH, where the frequency-time domain resource of the PDSCH avoids frequency time-domain resources occupied by reference signals and control channels of the first cell and the second cell;
on the overlapped frequency band, resource allocation signaling of the first cell and the second cell is scheduled in the united manner to share a frequency-time domain resource of a PDCCH, where the frequency-time domain resource of the PDCCH avoids the frequency-time domain resources occupied by the CRSs, PCFICHs and PHICHs of the first cell and the second cell; and
on the overlapped frequency band, when a location of the frequency-time domain resource of the PHICH of the first cell is overlapped with that of the second cell, uplink transmission ARQ response signaling of the first cell and the second cell is scheduled in the united manner to share the frequency-time domain resources of the PHICHs at an overlapped location in which the location of the frequency-time domain resource of the PHICH of the first cell is overlapped with that of the second cell.

Allocation of frequency-time domain resources to some control channels and reference signals, for example, the synchronization channels, the PBCHs and the CRSs, does not require scheduling, and the corresponding resources may be directly allocated according to a specification of a standard. As mentioned above, although occurrence of a resource conflict may be avoided as much as possible by selecting parameters during division of the whole frequency band and scheduling the other data, on the overlapped frequency band, locations of the frequency-time domain resources of the control channels and/or reference signals of the first cell and the second cell may still be overlapped (between the control channels of the two cells, between the reference signals of the two cells, between the control channel of one cell and the reference signal of the other cell, and the like), and under an overlapping condition, conflict processing is required, and the data of the control channel or reference signal of one cell is selected as the data at the overlapped location. Equivalently, the frequency-time domain resources are allocated to the selected data of the control channel.

For example, on the overlapped frequency, when a location of the frequency-time domain resource allocated to the CRS of the first cell is overlapped with that of the second cell, a value of the CRS at the overlapped location is determined according to one or more of the following rules:
a first rule: when the CRS at the overlapped location is located on a subcarrier where the PBCH of the first cell or the second cell is located, the value of the CRS at the overlapped location is determined by the cell to which the PBCH belongs;
a second rule: when a PRB where the CRS at the overlapped location is located has been allocated to a user of the first cell or the second cell, the value of the CRS at the overlapped location is determined by the cell of which the user is allocated with the PRB; and
a third rule: when a condition of at least one of the first rule or the second rule is not met, the value of the CRS at the overlapped location is determined by the first cell or the second cell randomly.

A CRS is arranged to channel estimation, so that the first rule is arranged to make broadcast data correctly decoded by a terminal, and the second rule is favorable for decoding of the user data.

For another example, on the overlapped frequency band, when a location of the frequency-time domain resource allocated to the PHICH of the first cell is overlapped with that of the second cell, PHICH data of the first cell or the second cell is selected as PHICH data at the overlapped location.

After the operation that the frequency-time domain resources are allocated to the data of the first cell and the second cell, the method may further include that: the data of the first cell and the second cell is mapped onto each subcarrier of an integrated frequency band formed by the first frequency band and the second frequency band for transmission according to a frequency-time domain resource allocation result. Processing during transmission includes modulation, Inverse Fast Fourier Transform (IFFT), cyclic prefix addition, digital-to-analogue conversion and up-conversion processing, and an over-the-air radio frequency transmitted waveform is formed. On a base station side, it may be considered that a new cell is formed, a frequency bandwidth of the cell is a frequency bandwidth of the integrated frequency bandwidth, the frequency bandwidth may be nonstandard, and a size of the overlapped frequency band of the first frequency band and the second frequency band may be regulated to make it very close or equal to the frequency bandwidth of the whole frequency band possessed by the operating company.

During mapping, the data of the two cells may be directly mapped onto each subcarrier of the integrated frequency band according to the frequency-time domain resources allocated to the data after resource allocation for the data of the two cells is completed (conflict processing has been performed when allocation); and after resource allocation for the data of the two cells is completed, according to the frequency-time domain resources allocated to the data, the data of the first cell may also be mapped onto subcarriers of the first frequency band at first, the data of the second cell is mapped onto subcarriers of the second cell, then the subcarrier data on the two frequency bands is combined according to the frequency-domain locations of the two frequency bands, conflict processing is performed during combination, and in such a manner, the data of the two cells is finally mapped onto each subcarrier of the integrated frequency band.

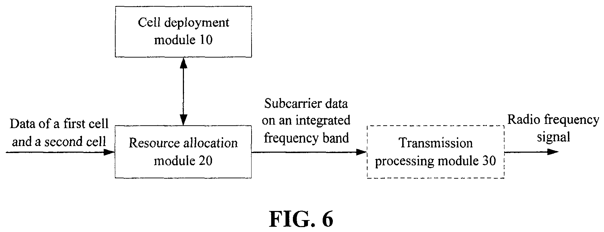

Correspondingly, the embodiment further provides a base station of an OFDM system. The OFDM system may be an LTE system or a subsequent evolved system of the LTE system. As shown in FIG. 6, the base station includes:
a cell deployment module 10, arranged to deploy a first cell and a second cell respectively based on a first frequency band and second frequency band with standard frequency bandwidths, where the first frequency band is partially overlapped with the second frequency band and a frequency band, in which the first frequency band is overlapped with the second frequency band, forms an overlapped frequency band; and
a resource allocation module 20, arranged to allocate frequency-time domain resources to data of the first cell and the second cell, including: on the overlapped frequency band, scheduling the data of the first cell and the second cell in a united manner, and allocating the frequency-time domain resources to the data of the first cell and the second cell,
where a center frequency point of each subcarriers of the first cell is aligned with a center frequency point of a corresponding subcarrier of the second cell is aligned on the overlapped frequency band.

Optionally,
the resource allocation module 20 is further arranged to:
on the frequency band of the first frequency band other than the overlapped frequency band, schedule the data of the first cell, and allocate the frequency-time domain resources to the data of the first cell; and
on the frequency band of the second frequency band other than the overlapped frequency band, schedule the data of the second cell, and allocate the frequency-time domain resources to the data of the second cell.

Optionally,
the resource allocation module 20 is arranged to:
on the overlapped frequency band, schedule user data of the first cell and the second cell in the united manner to share a frequency-time domain resource of a PDSCH, where the frequency-time domain resource of the PDSCH avoids frequency time-domain resources occupied by reference signals and control channels of the first cell and the second cell.

Optionally,
the resource allocation module 20 is arranged to:
on the overlapped frequency band, schedule resource allocation signaling of the first cell and the second cell in the united manner to share a frequency-time domain resource of a PDCCH, where the frequency-time domain resource of the PDCCH avoids frequency-time domain resources occupied by CRSs, PCFICHs and PHICHs of the first cell and the second cell.

Optionally,
the resource allocation module 20 is arranged to:
on the overlapped frequency band, when a location of the frequency-time domain resource of the PHICH of the first cell is overlapped with that of the second cell, schedule uplink transmission ARQ response signaling of the first cell and the second cell in the united manner to share the frequency-time domain resources of the PHICHs at the overlapped location.

Optionally,
the first frequency band and the second frequency band are obtained by dividing a whole frequency band possessed by an operating company.

Optionally,
the cell deployment module 10 is arranged to:
set PCIs of the first cell and the second cell to make a location of a CRS symbol of the first cell be identical to that of the second cell in overlapped subcarriers.

Optionally,
the resource allocation module 20 is further arranged to:
on the overlapped frequency band, when a location of the frequency-time domain resource allocated to at least one of a control channel or a reference signal of the first cell is overlapped with that of the second cell, perform conflict processing, and select data of the control channel or reference signal of one cell as data at the overlapped location.

Optionally,
the resource allocation module 20 is arranged to:
on the overlapped frequency band, when a location of the frequency-time domain resources allocated to the CRS of the first cell is overlapped with that of the second cell, determine a value of the CRS at the overlapped location according to one or more of the following rules:
a first rule: when the CRS at the overlapped location is located on a subcarrier where a PBCH of the first cell or the second cell is located, the value of the CRS at the overlapped location is determined by the cell to which the PBCH belongs;
a second rule: when a PRB where the CRS at the overlapped location is located has been allocated to a user of the first cell or the second cell, the value of the CRS at the overlapped location is determined by the cell of which the user is allocated with the PRB; and
a third rule: when a condition of at least one of the first rule or the second rule is not met, the value of the CRS at the overlapped location is determined by the first cell or the second cell randomly.

Optionally,
the resource allocation module 20 is arranged to:
on the overlapped frequency band, when a location of the frequency-time domain resource allocated to the PHICH of the first cell is overlapped wit that of the second cell, select PHICH data of the first cell or the second cell as PHICH data at the overlapped location.

Optionally,
the resource allocation module is further arranged to: map the data of the first cell and the second cell onto each of subcarriers of an integrated frequency band formed by the first frequency band and the second frequency band for transmission according to a frequency-time domain resource allocation result of the resource allocation module. Such subcarrier mapping processing may be considered as a link of a resource allocation process.

The base station further includes: a transmission processing module 30, arranged to transmit the data mapped onto each of the subcarriers of the integrated frequency band.

Optionally, a frequency bandwidth of the overlapped frequency band is equal to a frequency bandwidth of N RBs, where an RB is a minimum unit for resource allocation to the users, and N is a positive integer.

In the solutions of the embodiments, the frequency bandwidths of the two frequency bands used by the first cell and the second cell are both consistent with a definition of a standard such as the 3GPP, and may support access of a universal terminal. An overlapping degree of the two frequency bands may be regulated to make a total frequency bandwidth of the two frequency bands matched with a width of the whole frequency band possessed by the operating company, thereby fully utilizing spectrum resources. Moreover, the frequency bands are overlapped, so that a cell with a larger frequency bandwidth may be deployed, and a higher data rate may be provided for a single user.

From the point of a base station, on a nonoverlapped frequency band, the resources may be allocated to the first cell and the second cell respectively. On the overlapped frequency band, the data of the two cells is scheduled in the united manner, and the frequency-time domain resources are allocated to implement dynamic sharing of resources on the overlapped frequency band and avoid a resource conflict. The base station allocates corresponding resources to the terminal in a cell practically accessed by the terminal according to the cell. However, from the point of the terminal, there may be recognized that multiple cells exist on a spectrum, and each cell is consistent with the frequency bandwidth defined by the standard. The terminal selects to be connected to one cell and use the standard frequency bandwidth for data transmission, and pays no attention to whether frequency bands of these cells are overlapped or not.

Descriptions will be further made below with two practical application examples.

### Example 1

In the example, there is made such a hypothesis that an operating company possesses frequency band resources of a frequency bandwidth of about 6.06∼6.26MHz which is slightly higher than a 5MHz LTE frequency bandwidth defined by a standard but far lower than a 10MHz LTE frequency bandwidth defined by the standard. In order to fully utilize a spectrum, the whole frequency band is divided into a frequency band with the 5MHz standard frequency bandwidth for deployment of a cell A1 and a frequency band with a 3MHz standard frequency bandwidth for deployment of a cell B1, the two frequency bands used by the two cells are overlapped by 7 PRBs, the two frequency bands form an integrated frequency band, and the whole frequency band possessed by the operating company is just fully utilized. When a signal is practically transmitted, it is transmitted on the integrated frequency band, it may thus be considered that a new cell C1 is formed, and a frequency band used by the cell C1 is the integrated frequency band formed by the frequency band used by the cell A1 and the frequency band used by the cell B1.

The cell A1 with the 5MHz frequency bandwidth, according to the definition of the 3GPP, has totally 25 PRBs occupying a totally 4.5MHz frequency bandwidth, where each PRB occupies a 180KHz frequency bandwidth. Considering that a guard bandwidth of totally about 0.3∼0.5MHz is required to be reserved on two edges of a frequency band after modulation, the cell A1 practically occupies a 4.8∼5MHz frequency bandwidth. In order to utilize a frequency bandwidth which may be more than 4.8∼5MHz more efficiently, the cell B1 with the 3MHz frequency bandwidth is further defined in the example, and, according to the definition of the 3GPP, has totally 15 PRBs occupying a totally 2.7MHz frequency bandwidth, and each PRB also occupies a 180KHz frequency bandwidth. The cell B1 and the cell A1 are overlapped by 7 PRBs, but are staggered by 8 PRBs. Since the cell B1 and the cell A1 use a continuous OFDM modulation technology, subcarriers of the cell B1 and the cell A1 are mutually orthogonal.

33 PRBs, including the 25 PRBs of the cell A1 and the 8 PRBs, which are not overlapped with the cell A1, of the cell B1, may be deployed on the whole spectrum, that is, a 5.94MHz frequency bandwidth is occupied, to form the cell C1. During practical deployment of the cell C1, it is also necessary to consider the guard bandwidth of totally about 0.3∼0.5MHz on two sides, that is, a frequency bandwidth of about 6.24∼6.46MHz may be utilized. In the cell C1, 15 PRBs, i.e. PRB0∼PRB14, may be allocated to the cell B1 for use, and totally 25 PRBs, i.e. PRB8∼PRB32, may be allocated to the cell A1 for use. The cell A1 and the cell B1 share totally 7 PRBs, i.e. PRB8∼PRB14, the cell B1 independently uses PRB0∼PRB7, and the cell A1 independently uses totally 18 PRBs, i.e. PRB15-PRB32.

When the cell A1 or B1 allocates resources to a user it serves, own PRB numbering principle of the cell A1 or B1 is adopted.

By virtue of the method of the example, a spectrum bandwidth of an LTE standard cell defined by the 3GPP standard may be extended by taking a PRB as a unit.

In order to enable the cell A1 and the cell B1 to normally work according to the definitions of the 3GPP standard, attentions are also required to be paid to the following precautions.

### 1: Synchronization channel

In the example, synchronization channels of the cell A1 and the cell B1 are synchronized in terms of time, but 72 used subcarriers are completely not overlapped. Therefore, a terminal may distinguish synchronization channels of different cells, and may perform synchronization with the two cells respectively.

### 2: PBCH

PBCHs of the cell A1 and the cell B1 are synchronized in terms of time, but the 72 used subcarriers are completely not overlapped. Therefore, the terminal may read PBCH contents after synchronization with the cell A1 or the cell B1. The cell A1 defines in its PBCH content that the frequency bandwidth of the cell is 5MHz, and the cell B1 defines in its PBCH content that the frequency bandwidth of the cell is 3MHz. The terminal accessing the cell A1 or the cell B1 performs data transmission according to the frequency bandwidth of the cell it is connected with respectively, and does not use spectrum resources outside the frequency bandwidth of the cell A1 or the cell B1.

Resources allocated to the synchronization channels and PBCHs of the cell A1 and the cell B1 may not be overlapped through parameters such as a frequency bandwidth of an overlapped frequency band, and then the terminal may distinguish the two cells. Although the synchronization channels and PBCHs of the two cells are completely staggered on a frequency domain in the example, in case of partial overlapping on the frequency domain, they may also be staggered on a time domain.

### 3: CRS

A CRS in an LTE system has two characteristics. One is that a location of the CRS in each PRB is determined by a PCI. The other is that values of CRSs of a whole cell form a PCI related sequence, and values at different symbol locations of different subcarriers may be different.

Considering the first characteristic of the CRS, in the example, PCIs of the cell A1 and the cell B1 are selected to either be the same or have a difference which is a multiple of 6. In such a manner, locations of CRSs of the cell A1 and the cell B1 in each PRB in the overlapped frequency band (which may also be called as an overlapped spectrum) are completely overlapped, and each cell is prevented from sending the CRS with symbols at different locations to consume more frequency-time domain resources and influence sending of the other data.

Considering the second characteristic of the CRS, in the example, no discussions about how to select PCIs of the cell A1 and the cell B1 are made, and values, calculated according to the cell A1 and the cell B1 respectively, of CRSs at the same location on the frequency and time domains may not always be the same. Therefore, values of CRSs of the cell A1 and the cell B1 on the overlapped frequency band may have a conflict.

In the example, the problem of a value conflict of a CRS at an overlapped location is solved by adopting one or more of the following rules:
a first rule: when the CRS at the overlapped location is located on a subcarrier where the PBCH of the first cell or the second cell is located, the value of the CRS at the overlapped location is determined by the cell to which the PBCH belongs;
a second rule: when a PRB where the CRS at the overlapped location is located has been allocated to a user of the first cell or the second cell, the value of the CRS at the overlapped location is determined by the cell of which the user is allocated with the PRB; and
a third rule: when a condition of at least one of the first rule or the second rule is not met, the value of the CRS at the overlapped location is determined by the first cell or the second cell randomly, with a same probability.
when terminals connected to different cells receive CRS values which are not defined according to the corresponding cells at specified CRS locations, coherent demodulation performance may be influenced to a certain extent, and a degree of influence is related to coherent demodulation algorithms adopted by the terminals.

Of course, on a nonoverlapped frequency band, CRSs of the first cell and CRSs of the second cell are all valued by the corresponding cells.

### 4: PCFICH

Since a PCFICH is scrambled with a cell ID, for ensuring that users connected to different cells may demodulate PCFICHs, it is necessary to ensure that frequency-time-domain resources allocated to the PCFICHs of the different cells are not overlapped. According to a rule defined by the 3GPP standard, in the example, PCFICHs of the cell A1 appear in PRB8, PRB 14, PRB20 and PRB26 under the reference of the cell C1, and PCFICHs of the cell B1 appear in PRB0, PRB3, PRB7 and PRB 11 under the reference of the cell C1. Thus, it can be seen that the other PCFICHs of the two cells use different PRBs, and are not overlapped.

Under the condition of another example, a number of divided standard frequency bands, standard frequency bandwidths and the frequency bandwidth of the overlapped location of the frequency bands may be selected to substantially stagger the PCFICHs of the two cells. When an individual RE may not be staggered, it may be considered as a conflict, and when the PCFICH of one cell is selected, the PCFICH of the other cell may receive an error packet, but the PCFICH has a relatively higher error correction capability.

### 5: PHICH

Since a PHICH is scrambled with a cell ID, for ensuring that users connected to different cells may demodulate PHICHs, it is necessary to ensure that frequency-time domain resources allocated to the PHICHs of the different cells are not overlapped or avoid the different cells simultaneously using the PHICHs of the same frequency and time domains by scheduling. When the 5MHz cell A1 is configured with 2 PHICH groups and the 3MHz cell B1 is configured with 2 PHICH groups, according to a specification of the LTE system, it may be calculated that, in the example, PHICHs of the cell A1 appear in PRB8/9, PRB16/17 and PRB24/25 under the reference of the cell C1, while PHICHs of the cell B1 appear in PRB0/1, PRB5 and PRB10 under the reference of the cell C1. The PHICHs of the two cells are not overlapped.

However, when the 5MHz cell A1 is configured with 4 PHICH groups and the 3MHz cell B1 is still configured with 2 PHICH groups, it may be calculated that the frequency-time domain resources allocated to the PHICH of A1 in PRB10 and the PHICH of the cell B1 in PRB10 are the same. Therefore, during scheduling, when PHICH resources are allocated to a user of a cell A2 or B2, it is necessary to avoid frequency-time domain resources, occupied by the other cell, of PRB17 and PRB18. For example, when the cell A1 allocates PHICH resources to its user, it is necessary to avoid frequency-time domain resources, occupied by the cell B1, of PRB10 by scheduling.

Since a PHICH has a certain anti-interference capability, when the PHICHs allocated to the two cells have a conflict, conflict processing may further be performed. A value of one cell is selected for filling, a REG block of the user of the other cell is removed, and there are left two REG blocks to be decoded.

### 6: PDCCH

Since the cell A1 and the cell B1 send the PHICHs and the PCFICHs by virtue of different frequency-time domain resources and a number of resources which may be allocated to PDCCHs is also reduced, it is necessary to consider use of more symbols, for example, 2 or 3 symbols, for sending the PDCCHs in each subframe. In addition, the PDCCH of the cell A1 or the cell B1 must avoid the frequency-time domain resources which have been occupied by the CRSs, PHICHs, PCFICHs and the like of the two cells. Moreover, for the 7 PRBs in a spectrum of the overlapped location of the cell A1 and the cell B1, the two cells may dynamically allocate the frequency-time domain resources of the PDCCHs connected to all the users as a whole, to avoid the two cells allocating the same frequency-time domain resources to their own users with conflicts. when some symbols of a certain PRB of the overlapped frequency band have been allocated to the user of the cell A1, the same symbols may not be allocated to the user of the cell B1. In a PRB in a nonoverlapped spectrum, the two cells may independently allocate the frequency-time domain resources of the PDCCHs to their own users.

### 7: PDSCH

Since the frequency-time domain resources of the PBCHs and PDCCHs of the cell A1 and the cell B1 may occupy frequency-time domain locations of data channels of each other, each cell is required to avoid the resources occupied by the control channels and reference signals, for example, the PBCHs and the PDCCHs, of the two cells when allocating resources to its own user. For the 7 PRBs in an overlapped frequency band interval of the two cells, the two cells may dynamically allocate the frequency-time domain resources of PDSCHs connected to all the users as a whole, to avoid the two cells allocating the same frequency-time domain resources to their own users with conflicts. when some slots of a certain PRB of the overlapped frequency band have been allocated to the user of the cell A1, the same slots may not be allocated to the user of the cell B1. In a PRB in the nonoverlapped spectrum, the two cells may independently allocate the frequency-time domain resources of the PDSCHs to their own users.

In addition, for avoiding load unbalance between the cells, a decision may be made through a high-layer algorithm based on a user number and traffic volume of each cell to migrate part of users connected to a certain cell to another cell to be served through an intercell handover signaling flow.

### Example 2

In the example, there is made such a hypothesis that an operating company possesses frequency band resources of a frequency bandwidth of about 7.86∼8.06MHz which is higher than a 5MHz LTE frequency bandwidth defined by a standard but lower than a 10MHz LTE frequency bandwidth defined by the standard. In order to fully utilize a spectrum, the whole frequency band is divided into two frequency bands with the 5MHz standard frequency bandwidth for respective deployment of cells A2 and B2, they are overlapped by 8 PRBs and staggered by 17PRBs, the existing radio frequency bandwidth is just fully utilized, to form a new cell C2, and a frequency band used by the cell C2 is an integrated frequency band formed by the two frequency bands.

Since the cell B2 and the cell A2 use a continuous OFDM modulation technology, subcarriers of the cell B2 and the cell A2 are mutually orthogonal, and no guard bandwidth is required. 42 PRBs, including 25 PRBs of the cell A2 and the 17 PRBs, which are not overlapped with the cell A2, of the cell B2, may be deployed on the whole spectrum, that is, a 7.56MHz frequency bandwidth is occupied, to form the new cell C2. During practical deployment of the cell C2, it is also necessary to consider a guard bandwidth of totally about 0.3∼0.5MHz on two sides, that is, a frequency bandwidth of about 7.86∼8.06MHz may be utilized. In the cell C2, totally 25 PRBs, i.e. PRB0∼PRB24, may be allocated to the cell B2 for use, and totally 25 PRBs, i.e. PRB 17∼PRB41, may be allocated to the cell A2 for use. The cell A2 and the cell B2 share totally 8 PRBs, i.e. PRB17∼PRB24, the cell B2 independently uses PRB0∼PRB16, and the cell A2 independently uses totally 17 PRBs, i.e. PRB25-PRB41.

From the point of the cell A2, numbers of the PRBs are different from numbers of the PRBs of the cell C2, PRB0 of the cell A2 corresponds to PRB17 of the cell C2, PRB1 of the cell A2 corresponds to PRB18 of the cell C2, and so on. When the cell A2 allocates resources to a user it serves, own PRB numbering principle of the cell A2 is adopted. The same to the cell B2.

Although a frequency bandwidth of about 8MHz including the cell (25 PRBs) of the 5MHz standard frequency bandwidth and the cell (15 PRBs) of the 3MHz standard frequency bandwidth may be used according to the definition of the 3GPP, such a deployment manner may make totally 40 PRBs available only, fewer than 42 PRBs available in the example, on one hand, and on the other hand, makes a peak rate of the user accessing the 3MHz cell lower than access to the 5MHz cell.

In order to enable the cell A2 and cell B2adopting the solution shown in the example to normally work according to the definitions of the 3GPP standard, attentions are also required to be paid to the following precautions.

### 1: Synchronization channel

Synchronization channels of the cell A2 and the cell B2 are synchronized in terms of time, but 72 used subcarriers are completely not overlapped. Therefore, a terminal may distinguish synchronization channels of different cells, and may perform synchronization with the two cells respectively. According to the solution of the example, the cell A2 and the cell B2 may both use the same or different PCIs.

### 2: PBCH

PBCHs of the cell A2 and the cell B2 are synchronized in terms of time, but the 72 used subcarriers are completely not overlapped. Therefore, the terminal may read PBCH contents after synchronization with the cell A2 or the cell B2. The cells A2 and B2 both define in their broadcast contents that the frequency bandwidths of the cells are 5MHz, and the terminal accessing the cell A2 or the cell B2 performs data transmission according to the defined frequency bandwidth respectively, and does not use spectrum resources outside the frequency bandwidth.

In the example, nonoverlapped synchronization channels and PBCHs are allocated to the cell A2 and the cell B2, so that the terminal may distinguish the two cells.

### 3: CRS

A CRS has two characteristics. One is that a location of the CRS in each PRB is determined by a PCI. The other is that values of CRSs of a whole cell form a PCI related sequence, and values at different symbol locations of different subcarriers may be different.

Considering the first characteristic of the CRS, in the example, PCIs of the cell A2 and the cell B2 are selected to either be the same or have difference which is a multiple of 6. In such a manner, locations of CRSs of the cell A2 and the cell B2 in each PRB in the overlapped frequency band are completely overlapped, and higher frequency-time domain resource consumption caused by CRS sending of each cell with symbols at different locations is avoided.

Considering the second characteristic of the CRS, in the example, no discussions about how to select the PCIs of the cell A2 and the cell B2 are made, and values, calculated according to the cell A2 and the cell B2 respectively, of CRSs at the same location on the frequency and time domains may not always be the same. Therefore, values of CRSs of the cell A2 and the cell B2 on the overlapped frequency band may have a conflict.

In the example, the problem of a value conflict of a CRS at an overlapped location is solved by adopting one or more of the following rules:
a first rule: when the CRS at the overlapped location is located on a subcarrier where the PBCH of the first cell or the second cell is located, the value of the CRS at the overlapped location is determined by the cell to which the PBCH belongs;
a second rule: when a PRB where the CRS at the overlapped location is located has been allocated to a user of the first cell or the second cell, the value of the CRS at the overlapped location is determined by the cell of which the user is allocated with the PRB; and
a third rule: when a condition of at least one of the first rule or the second rule is not met, the value of the CRS at the overlapped location is determined by the first cell or the second cell randomly, with a same probability.

When terminals connected to different cells receive CRS values which are not defined according to the corresponding cells at specified CRS locations, coherent demodulation performance may be influenced to a certain extent, and a degree of influence is related to coherent demodulation algorithms adopted by the terminals.

### 4: PCFICH

Since a PCFICH is scrambled with a cell ID, for ensuring that users connected to different cells may demodulate PCFICHs, it is necessary to ensure that frequency-time-domain resources allocated to the PCFICHs of the different cells are not overlapped. According to a rule defined by the 3GPP standard, in the example, PCFICHs of the cell B2 appear in PRB0, PRB6, PRB12 and PRB18 under the reference of the cell C2, and PCFICHs of the cell A2 appear in PRB17, PRB13, PRB29 and PRB35 under the reference of the cell C2. Thus, it can be seen that the other PCFICHs of the two cells are not overlapped.

### 5: PHICH

Since a PHICH is scrambled with a cell ID, for ensuring that users connected to different cells may demodulate PHICHs, it is necessary to ensure that frequency-time domain resources allocated to the PHICHs of the different cells are not overlapped or avoid the different cells simultaneously using the PHICHs of the same frequency and time domains by scheduling.

When the two 5MHz cells are both configured with 4 PHICH groups, it may be calculated that, in the example, PHICHs of the cell B2 appear in PRB0/1/2, PRB8/9/10 and PRB 16/17/18 under the reference of the cell C2, while PHICHs of the cell A2 appear in PRB17/18/19, PRB25/26/27 and PRB33/34/35 under the reference of the cell C2. The frequency-time domain resources of the PHICH of the cell A2 in PRB17/18 and the PHICH of the cell B in PRB 17/18 are the same, and the frequency-time domain resources of the PHICH of A2 in PRB18 and the PCFICH of the cell B2 in PRB18 are the same. The other PHICHs of the two cells are not overlapped. Therefore, during scheduling, when PHICH resources are allocated to the user of the cell A2 or B2, it is necessary to avoid the frequency-time domain resources occupied by the other cell in PRB17 and PRB18.

### 6: PDCCH

In the example, 3 symbols are used for sending a PDCCH. When the cell A2 or the cell B2 sends a PDCCH, it is necessary to avoid the frequency-time domain resources occupied by the abovementioned channels. In addition, for the 8 PRBs in a spectrum of the overlapped location of the cell A2 and the cell B2, the two cells may dynamically allocate the frequency-time domain resources of the PDCCHs connected to all the users as a whole, to avoid the two cells allocating the same frequency-time domain resources to their own users with conflicts. When some symbols of a certain PRB of the overlapped frequency band have been allocated to the user of the cell A2, the same symbols may not be allocated to the user of the cell B2. In a PRB in a nonoverlapped spectrum, the two cells may independently allocate the frequency-time domain resources of the PDCCHs to their own users.

### 7: PDSCH

Since the frequency-time domain resources of the PBCHs and PDCCHs of the cell A2 and the cell B2 may occupy frequency-time domain locations of data channels of each other, each cell is required to avoid the resources occupied by the PBCHs and the PDCCHs of the other cells when allocating resources to its own user. For the 8 PRBs in an overlapped frequency band interval of the two cells, the two cells may dynamically allocate the frequency-time domain resources of PDSCHs connected to all the users as a whole, to avoid the two cells allocating the same frequency-time domain resources to their own users with conflicts. When some slots of a certain PRB of the overlapped frequency band have been allocated to the user of the cell A2, the same slots may not be allocated to the user of the cell B2. In a PRB in the nonoverlapped spectrum, the two cells may independently allocate the frequency-time domain resources of the PDSCHs to their own users.

In addition, for avoiding load unbalance between the cells, a decision may be made through a high-layer algorithm based on a user number and traffic volume of each cell to migrate part of users connected to a certain cell to another cell to be served through an intercell handover signaling flow.

### Example 3

The example is similar to example 2, and an 8.4∼8.6MHz frequency bandwidth may be deployed. Two cells A3 and B3 with a 5MHz frequency bandwidth are used, but they are only overlapped by 5 PRBs and staggered by 20 PRBs. 45 PRBs, including 25 PRBs of the cell A3 and 20 PRBs, which are not overlapped with the cell A3, of the cell B3, may be deployed on a whole spectrum, that is, an 8.1MHz frequency bandwidth is occupied, to form a new cell C3.

During practical deployment of the cell C3, it is also necessary to consider a guard bandwidth of totally about 0.3∼0.5MHz on two sides, that is, a frequency bandwidth of about 8.4∼8.6MHz may be utilized. In the cell C3, totally 25 PRBs, i.e. PRB0∼PRB24, may be allocated to the cell B3 for use, and totally 25 PRBs, i.e. PRB20∼PRB44, may be allocated to the cell A3 for use. The cell A3 and the cell B3 share totally 5 PRBs, i.e. PRB20∼PRB24, the cell B3 independently uses totally 20 PRBs, i.e. PRB0∼PRB19, and the cell A3 independently uses totally 20 PRBs, i.e. PRB25-PRB44.

From the point of the cell A3, numbers of the PRBs are different from numbers of the PRBs of the cell C3, PRB0 of the cell A3 corresponds to PRB20 of the cell C3, PRB1 of the cell A3 corresponds to PRB21 of the cell C3, and so on. When the cell A3 allocates resources to a user it serves, own PRB numbering principle of the cell A3 is adopted. The same to the cell B3.

During deployment according to such a manner, PCFICHs and PHICHs of the two cells are not overlapped.

In the example, another solution is adopted for CRS conflict of the two cells, that is, PCIs of the two cells are set, for example, a rule that moduli 6 of the PCIs of the two cells have a difference of 1, to stagger locations of the CRSs. Moreover, CRS transmission of the two cells is simultaneously reserved in the overlapped PRBs, so that influence on channel coherent demodulation is reduced. However, meanwhile, this means that data of one cell, when being at a CRS location of the other cell, is either avoided by high-layer scheduling or directly covered by the CRS value and restored through own redundancy error correction capability of the data.

According to the example, it can be seen that, by applying the example of the disclosure, the frequency bandwidth of the small-interval overlapped location may be properly regulated to meet requirements of different frequency bandwidths.

It is important to note that overlapping combination manners of different standard frequency bandwidths are unlikely to be exhausted, and the examples in the disclosure are only some presentations of feasibility and utilization method of the disclosure and not intended to represent all possible application combinations. In the disclosure, the examples are described with two carriers, but according to the same principle, more than two carriers may also be combined. The examples of the disclosure may be used for an OFDM modulation technology-based wireless communication system, may be used for various carrier frequency bandwidths, and is not limited to, for example, some specific carrier frequency bandwidths pre-specified according to a communication protocol standard.

Those skilled in the art should know that all or part of the steps of the example may be implemented by a flow of a computer program, the computer program may be stored in a computer-readable storage medium, the computer program is executed on a corresponding hardware platform (for example, a system, equipment, a device and an apparatus), and during execution, one or combination of the steps of the method example is included.

Optionally, all or part of the steps of the examples may further be implemented by virtue of an integrated circuit, these steps may form multiple integrated circuit modules respectively, or multiple modules or steps therein may form a single integrated circuit module for implementation.

The devices/function modules/units in the examples may be implemented by adopting a universal computing device, and they may be concentrated on a single computing device, and may also be distributed on a network formed by multiple computing devices.

When being implemented in form of software function module and sold or used as independent products, the devices/function modules/function units in the examples may be stored in a computer-readable storage medium. The abovementioned computer-readable storage medium may be a read-only memory, a magnetic disk, an optical disk or the like.

## Claims

1. A method for utilizing spectrum resources of an Orthogonal Frequency Division Multiplexing, OFDM, system, the method comprising
obtaining at least two frequency bands with standard frequency bandwidths by dividing a whole frequency band possessed by an operating company, wherein the at least two frequency bands comprise a first frequency band and a second frequency band which have standard frequency bandwidths supporting access of a universal terminal, and wherein the first frequency band is partially overlapped with the second frequency band such that a total frequency bandwidth of the first and second frequency bands matches with a width of the whole frequency band of the operating company,
deploying a first cell and a second cell respectively based on the first frequency band and the second frequency band, wherein an frequency band, in which the first frequency band is overlapped with the second frequency band, forms an overlapped frequency band (110), wherein the overlapped frequency band is deployed by one cell deployment module of a base station; and
allocating frequency-time domain resources to data of the first cell and the second cell, comprising: on the overlapped frequency band, allocating, by the one resource allocation module of the base station, the frequency-time domain resources to the data of the first cell and the second cell in a united manner (120), and on a frequency band of the first frequency band other than the overlapped frequency band and on a frequency band of the second frequency band other than the overlapped frequency band, allocating, by the resource allocation module of the base station, the data of the first cell and the data of the second cell in separate manners, and allocating a first frequency-time domain resource to the data of the first cell and a second frequency-time domain resource to the data of the second cell separately,
wherein a center frequency point of a subcarrier of the first cell is aligned with a center frequency point of a corresponding subcarrier of the second cell on the overlapped frequency band.

2. The method according to claim 1, wherein allocating the frequency-time domain resources to the data of the first cell and the second cell on the overlapped frequency band in the united manner, comprises:
on the overlapped frequency band, scheduling user data of the first cell and the second cell in the united manner to share a frequency-time domain resource of a Physical Downlink Shared Channel, PDSCH, wherein the frequency-time domain resource of the PDSCH avoids frequency time-domain resources occupied by reference signals and control channels of the first cell and the second cell.

3. The method according to claim 1, wherein allocating the frequency-time domain resources to the data of the first cell and the second cell on the overlapped frequency band in the united manner, comprises:
on the overlapped frequency band, scheduling resource allocation signaling of the first cell and the second cell in the united manner to share a frequency-time domain resource of a Physical Downlink Control Channel, PDCCH, wherein the frequency-time domain resource of the PDCCH avoids frequency-time domain resources occupied by Cell-specific Reference Signals, CRSs, Physical Control Format Indicator Channels, PCFICHs, and Physical Hybrid Automatic Repeat Request, ARQ, Indicator Channels, PHICHs, of the first cell and the second cell.

4. The method according to claim 1, wherein allocating the frequency-time domain resources to the data of the first cell and the second cell on the overlapped frequency band in the united manner, comprises:
on the overlapped frequency band, when a location of the frequency-time domain resource of the PHICH of the first cell is overlapped with a location of the frequency-time domain resource of the PHICH of the second cell, scheduling uplink transmission ARQ response signaling of the first cell and the second cell in the united manner to share the frequency-time domain resources of the PHICHs, at an overlapped location in which the location of the frequency-time domain resource of the PHICH of the first cell is overlapped with that of the second cell.

5. The method according to claim 1, wherein dividing the whole frequency band possessed by the operating company into the at least two frequency bands with the standard frequency bandwidths, comprises:
selecting a number of divided frequency bands, the standard frequency bandwidths and a frequency bandwidth of the overlapped frequency band, to make subcarrier resources allocated, according to a resource allocation manner specified by the OFDM system, to at least one of a synchronization channel or a Physical Broadcast Channel, PBCH, of the first cell, be different from that of the second cell.

6. The method according to claim 1, wherein
dividing the whole frequency band possessed by the operating company into the at least two frequency bands with the standard frequency bandwidths, comprises:
selecting the number of the divided frequency bands, the standard frequency bandwidths and the frequency bandwidth of the overlapped frequency band, to make allocation of the frequency-time domain resources on the overlapped frequency band according to the resource allocation manner specified by the OFDM system meet one or more of the following conditions:
the frequency-time domain resource allocated to the PCFICH of the first cell is not overlapped with that of the second cell;
the frequency-time domain resource allocated to the PHICH of the first cell is not overlapped with that of the second cell;
the frequency-time domain resource allocated to the PHICH of the first cell is not overlapped with the frequency-time domain resource allocated to the PCFICH of the second cell; and
the frequency-time domain resource allocated to the PCFICH of the first cell is not overlapped with the frequency-time domain resource of the PHICH of the second cell.

7. The method according to claim 1, wherein deploying the first cell and the second cell respectively based on the first frequency band and second frequency band with the standard frequency bandwidths, comprises:
setting Physical Cell Identifiers, PCIs, of the first cell and the second cell to make a location of a CRS symbol of the first cell be identical to a location of a CRS symbol of the second cell in overlapped subcarriers.

8. The method according to any one of claims 1 to 7, wherein allocating the frequency-time domain resources to the data of the first cell and the second cell further, comprises:
on the overlapped frequency band, when a location of the frequency-time domain resource allocated to at least one of the control channel or reference signal of the first cell is overlapped with that of the second cell, performing conflict processing, to select data of the control channel or reference signal of the first cell or the second cell as data at the overlapped location;
wherein the conflict processing comprises: on the overlapped frequency band, when a location of the frequency-time domain resource allocated to the CRS of the first cell is overlapped with that of the second cell, determining a value of the CRS at the overlapped location according to one or more of the following rules:
a first rule: when the CRS at the overlapped location is located on a subcarrier where the PBCH of the first cell or the second cell is located, the value of the CRS at the overlapped location is determined by the cell to which the PBCH belongs;
a second rule: when a Physical Resource Block, PRB, where the CRS at the overlapped location is located has been allocated to a user of the first cell or the second cell, the value of the CRS at the overlapped location is determined by the cell of which the user is allocated with the PRB; and
a third rule: when a condition of at least one of the first rule or the second rule is not met, the value of the CRS at the overlapped location is determined by the first cell or the second cell randomly;
or
wherein the conflict processing comprises:
on the overlapped frequency band, when the location of the frequency-time domain resource allocated to the PHICH of the first cell is overlapped with that of the second cell, selecting PHICH data of the first cell or the second cell as PHICH data at the overlapped location..

9. The method according to any one of claims 1 to 8, wherein after allocating the frequency-time domain resources to the data of the first cell and the second cell, the method further comprises:
according to a frequency-time domain resource allocation result, mapping the data of the first cell and the second cell onto each of subcarriers of an integrated frequency band formed by the first frequency band and the second frequency band for transmission.

10. The method according to any one of claims 1 to 8, wherein the frequency bandwidth of the overlapped frequency band is equal to a frequency bandwidth of N Resource Blocks, RBs, wherein an RB is a minimum unit for resource allocation to the users, and N is a positive integer.

11. A base station of an Orthogonal Frequency Division Multiplexing, OFDM, system, the base station comprising:
a cell deployment module (10), arranged to deploy a first cell and a second cell respectively based on a first frequency band and second frequency band which have standard frequency bandwidths supporting access of a universal terminal with, wherein the first frequency band and the second frequency band are obtained by dividing a whole frequency band possessed by an operating company, and wherein the first frequency band is partially overlapped with the second frequency band such that a total frequency bandwidth of the first and second frequency bands matches with a width of the whole frequency band of the operating company, and a frequency band, in which the first frequency band is overlapped with the second frequency band, forms an overlapped frequency band; and
a resource allocation module (20), arranged to allocate frequency-time domain resources to data of the first cell and the second cell, comprising: on the overlapped frequency band, allocating, by the resource allocation module, the frequency-time domain resources to data of the first cell and the second cell in a united manner, and on a frequency band of the first frequency band other than the overlapped frequency band and on a frequency band of the second frequency band other than the overlapped frequency band, allocating, by the resource allocation module, the data of the first cell and the data of the second cell in separate manners, and allocating a first frequency-time domain resource to the data of the first cell and a second frequency-time domain resource to the data of the second cell separately,
wherein a center frequency point of each subcarrier of the first cell is aligned with a center frequency point of a corresponding subcarrier of the second cell on the overlapped frequency band.

## Patentansprüche

1. Verfahren zur Verwendung von Spektrumsressourcen eines orthogonalen Frequenzmultiplex, OFDM, -Systems, wobei das Verfahren umfasst:
Erhalten von zumindest zwei Frequenzbändern mit Standard-Frequenzbandbreiten durch Teilung eines ganzen Frequenzbandes, das von einer Betreibergesellschaft besessen wird, worin die zumindest zwei Frequenzbänder ein erstes Frequenzband und ein zweites Frequenzband umfassen, die Standard-Frequenzbandbreiten haben, welche Zugang eines Universalendgeräts unterstützen, und worin das erste Frequenzband teilweise mit dem zweiten Frequenzband überlappt wird, so dass eine gesamte Frequenzbandbreite des ersten und des zweiten Frequenzbandes zu einer Breite des ganzen Frequenzbandes der Betreibergesellschaft passt,
Einsetzen einer ersten Zelle und einer zweiten Zelle jeweils aufgrund des ersten Frequenzbandes und des zweiten Frequenzbandes, worin ein Frequenzband, in dem das erste Frequenzband mit dem zweiten Frequenzband überlappt wird, ein überlapptes Frequenzband (110) bildet, worin das überlappte Frequenzband von einem Zelleneinsatzmodul einer Basisstation eingesetzt wird; und
Zuweisen von Frequenz-Zeitbereichsressourcen Daten der ersten Zelle und der zweiten Zelle, umfassend: am überlappten Frequenzband, Zuweisen, durch das eine Ressourcenzuweisungsmodul der Basisstation, der Frequenz-Zeitbereichsressourcen Daten der ersten Zelle und der zweiten Zelle in einer vereinten Weise (120), und an einem Frequenzband des ersten Frequenzbandes anders als dem überlappten Frequenzband und an einem Frequenzband des zweiten Frequenzbandes anders als dem überlappten Frequenzband, Zuweisen, durch das Ressourcenzuweisungsmodul der Basisstation, der Daten der ersten Zelle und der Daten der zweiten Zelle in getrennten Weisen, und Zuweisen einer ersten Frequenz-Zeitbereichsressource den Daten der ersten Zelle und einer zweiten Frequenz-Zeitbereichsressource den Daten der zweiten Zelle in getrennter Weise,
worin ein Mittenfrequenzpunkt eines Unterträgers der ersten Zelle mit einem Mittenfrequenzpunkt eines entsprechenden Unterträgers der zweiten Zelle am überlappten Frequenzband ausgerichtet ist.

2. Verfahren nach Anspruch 1, worin das Zuweisen der Frequenz-Zeitbereichsressourcen den Daten der ersten Zelle und der zweiten Zelle am überlappten Frequenzband in der vereinten Weise umfasst:
am überlappten Frequenzband, Planen von Benutzerdaten der ersten Zelle und der zweiten Zelle in der vereinten Weise, um eine Frequenz-Zeitbereichsressource eines physikalischen gemeinsam verwendeten Abwärtsverbindungskanals, PDSCH, gemeinsam zu nutzen, worin die Frequenz-Zeitbereichsressource des PDSCH Frequenz-Zeitbereichsressourcen, die von Referenzsignalen und Steuerungskanälen der ersten Zelle und der zweiten Zelle besetzt sind, vermeidet.

3. Verfahren nach Anspruch 1, worin das Zuweisen der Frequenz-Zeitbereichsressourcen den Daten der ersten Zelle und der zweiten Zelle am überlappten Frequenzband in der vereinten Weise umfasst:
am überlappten Frequenzband, Planen von Ressourcenzuweisungssignalisierung der ersten Zelle und der zweiten Zelle in der vereinten Weise, um eine Frequenz-Zeitbereichsressource eines physikalischen Abwärtsverbindungssteuerkanals, PDCCH, gemeinsam zu nutzen, worin die Frequenz-Zeitbereichsressource des PDCCH Frequenz-Zeitbereichsressourcen, die von zellspezifischen Referenzsignalen, CRS, physikalischen Steuerformatanzeigekanälen, PCFICH, und physikalischen hybriden automatischen Wiederholungsaufforderungs-, ARQ, Anzeigekanälen, PHICH, der ersten Zelle und der zweiten Zelle besetzt sind, vermeidet.

4. Verfahren nach Anspruch 1, worin das Zuweisen der Frequenz-Zeitbereichsressourcen den Daten der ersten Zelle und der zweiten Zelle am überlappten Frequenzband in der vereinten Weise umfasst:
am überlappten Frequenzband, wenn ein Standort der Frequenz-Zeitbereichsressource des PHICH der ersten Zelle mit einem Standort der Frequenz-Zeitbereichsressource des PHICH der zweiten Zelle überlappt wird, Planen von Aufwärtsverbindungsübertragungs-ARQ-Antwortsignalisierung der ersten Zelle und der zweiten Zelle in der vereinten Weise, um die Frequenz-Zeitbereichsressourcen des PHICH an einem überlappten Standort gemeinsam zu nutzen, in dem der Standort der Frequenz-Zeitbereichsressource des PHICH der ersten Zelle mit demjenigen der zweiten Zelle überlappt wird.

5. Verfahren nach Anspruch 1, worin das Teilen des ganzen Frequenzbandes, das von der Betreibergesellschaft besessen wird, in die zumindest zwei Frequenzbänder mit den Standard-Frequenzbandbreiten umfasst:
Auswählen einer Anzahl von geteilten Frequenzbändern, den Standard-Frequenzbandbreiten und einer Frequenzbandbreite des überlappten Frequenzbandes, um zu bewirken, dass Unterträgerressourcen, die gemäß einer Ressourcenzuweisungsweise, die vom OFDM-System spezifiziert wird, zumindest einem von einem Synchronisationskanal oder einem physikalischen Broadcast-Kanal, PBCH, der ersten Zelle zugewiesen werden, anders sind als diejenigen der zweiten Zelle.

6. Verfahren nach Anspruch 1, worin
das Teilen des ganzen Frequenzbandes, das von der Betreibergesellschaft besessen wird, in die zumindest zwei Frequenzbänder mit den Standard-Frequenzbandbreiten umfasst:
Auswählen der Anzahl der geteilten Frequenzbänder, der Standard-Frequenzbandbreiten und der Frequenzbandbreite des überlappten Frequenzbandes, um zu bewirken, dass die Zuweisung der Frequenz-Zeitbereichsressourcen am überlappten Frequenzband gemäß der Ressourcenzuweisungsweise, die vom OFDM-System spezifiziert wird, eine oder mehrere der folgenden Bedingungen erfüllt:
die Frequenz-Zeitbereichsressource, die dem PCFICH der ersten Zelle zugewiesen ist, wird mit derjenigen der zweiten Zelle nicht überlappt;
die Frequenz-Zeitbereichsressource, die dem PHICH der ersten Zelle zugewiesen ist, wird mit derjenigen der zweiten Zelle nicht überlappt;
die Frequenz-Zeitbereichsressource, die dem PHICH der ersten Zelle zugewiesen ist, wird mit der Frequenz-Zeitbereichsressource, die dem PCFICH der zweiten Zelle zugewiesen ist, nicht überlappt; und
die Frequenz-Zeitbereichsressource, die dem PCFICH der ersten Zelle zugewiesen ist, wird mit der Frequenz-Zeitbereichsressource des PHICH der zweiten Zelle nicht überlappt.

7. Verfahren nach Anspruch 1, worin das Einsetzen der ersten Zelle und der zweiten Zelle jeweils aufgrund des ersten Frequenzbandes und des zweiten Frequenzbandes mit den Standard-Frequenzbandbreiten umfasst:
Setzen von physikalischen Zellenidentifizierern, PCI, der ersten Zelle und der zweiten Zelle, um zu bewirken, dass ein Standort eines CRS-Symbols der ersten Zelle mit einem Standort eines CRS-Symbols der zweiten Zelle in überlappten Unterträgern identisch ist.

8. Verfahren nach einem der Ansprüche 1 bis 7, worin das Zuweisen der Frequenz-Zeitbereichsressourcen den Daten der ersten Zelle und der zweiten Zelle ferner umfasst:
am überlappten Frequenzband, wenn ein Standort der Frequenz-Zeitbereichsressource, die zumindest einem von dem Steuerungskanal oder dem Referenzsignal der ersten Zelle zugewiesen ist, mit demjenigen der zweiten Zelle überlappt wird, Durchführen von Konfliktverarbeitung, um Daten des Steuerungskanals oder des Referenzsignals der ersten Zelle oder der zweiten Zelle als Daten an dem überlappten Standort auszuwählen;
worin die Konfliktverarbeitung umfasst: am überlappten Frequenzband, wenn ein Standort der Frequenz-Zeitbereichsressource, die dem CRS der ersten Zelle zugewiesen ist, mit demjenigen der zweiten Zelle überlappt wird, Bestimmen eines Wertes des CRS an dem überlappten Standort gemäß einer oder mehreren von den folgenden Regeln:
einer ersten Regel: wenn das CRS an dem überlappten Standort an einem Unterträger gelegen ist, wo der PBCH der ersten Zelle oder der zweiten Zelle gelegen ist, wird der Wert des CRS an dem überlappten Standort durch die Zelle bestimmt, zu der der PBCH gehört;
einer zweiten Regel: wenn ein physikalischer Ressourcenblock, PRB, wo der CRS an dem überlappten Standort gelegen ist, einem Benutzer der ersten Zelle oder der zweiten Zelle zugewiesen worden ist, wird der Wert des CRS an dem überlappten Standort durch die Zelle bestimmt, deren Benutzer mit dem PRB zugewiesen wird; und
einer dritten Regel: wenn eine Bedingung von zumindest einer von der ersten Regel oder der zweiten Regel nicht erfüllt ist, wird der Wert des CRS an dem überlappten Standort von der ersten Zelle oder der zweiten Zelle zufällig bestimmt;
oder
worin die Konfliktverarbeitung umfasst:
am überlappten Frequenzband, wenn der Standort der Frequenz-Zeitbereichsressource, die dem PHICH der ersten Zelle zugewiesen ist, mit demjenigen der zweiten Zelle überlappt wird, Auswählen von PHICH-Daten der ersten Zelle oder der zweiten Zelle als PHICH-Daten an dem überlappten Standort.

9. Verfahren nach einem der Ansprüche 1 bis 8, worin nach dem Zuweisen der Frequenz-Zeitbereichsressourcen den Daten der ersten Zelle und der zweiten Zelle, das Verfahren ferner umfasst:
gemäß einem Frequenz-Zeitbereichsressourcenzuweisungsergebnis, Mapping der Daten der ersten Zelle und der zweiten Zelle auf jedem der Unterträger eines integrierten Frequenzbandes, das vom ersten Frequenzband und vom zweiten Frequenzband für die Übertragung gebildet ist.

10. Verfahren nach einem der Ansprüche 1 bis 8, worin die Frequenzbandbreite des überlappten Frequenzbandes einer Frequenzbandbreite von N Ressourcenblöcken, RB, gleich ist, worin ein RB eine Mindesteinheit für die Zuweisung von Ressourcen den Benutzern ist, und N eine positive Ganzzahl ist.

11. Basisstation eines orthogonalen Frequenzmultiplex, OFDM, -Systems, wobei die Basisstation umfasst:
ein Zelleneinsatzmodul (10), das dazu eingerichtet ist, eine erste Zelle und eine zweite Zelle jeweils aufgrund eines ersten Frequenzbandes und eines zweiten Frequenzbandes einzusetzen, die Standard-Frequenzbandbreiten haben, welche Zugang eines Universalendgeräts unterstützen, worin das erste Frequenzband und das zweite Frequenzband durch Teilung eines ganzen Frequenzbandes, das von einer Betreibergesellschaft besessen wird, erhalten werden, und worin das erste Frequenzband teilweise mit dem zweiten Frequenzband überlappt wird, so dass eine gesamte Frequenzbandbreite des ersten und des zweiten Frequenzbandes zu einer Breite des ganzen Frequenzbandes der Betreibergesellschaft passt, und ein Frequenzband, in dem das erste Frequenzband mit dem zweiten Frequenzband überlappt wird, ein überlapptes Frequenzband bildet; und
ein Ressourcenzuweisungsmodul (20), das dazu eingerichtet ist, Frequenz-Zeitbereichsressourcen Daten der ersten Zelle und der zweiten Zelle zuzuweisen, umfassend: am überlappten Frequenzband, Zuweisen, durch das Ressourcenzuweisungsmodul, der Frequenz-Zeitbereichsressourcen Daten der ersten Zelle und der zweiten Zelle in einer vereinten Weise, und an einem Frequenzband des ersten Frequenzbandes anders als dem überlappten Frequenzband und an einem Frequenzband des zweiten Frequenzbandes anders als dem überlappten Frequenzband, Zuweisen, durch das Ressourcenzuweisungsmodul, der Daten der ersten Zelle und der Daten der zweiten Zelle in getrennten Weisen, und Zuweisen einer ersten Frequenz-Zeitbereichsressource den Daten der ersten Zelle und einer zweiten Frequenz-Zeitbereichsressource den Daten der zweiten Zelle in getrennter Weise,
worin ein Mittenfrequenzpunkt jedes Unterträgers der ersten Zelle mit einem Mittenfrequenzpunkt eines entsprechenden Unterträgers der zweiten Zelle am überlappten Frequenzband ausgerichtet ist.

## Revendications

1. Procédé d'utilisation de ressources spectrales d'un système de multiplexage par répartition orthogonale de la fréquence (OFDM), le procédé comprenant l'obtention d'au moins deux bandes de fréquence avec des largeurs de bande de fréquence standard en divisant une bande de fréquence entière possédée par une société d'exploitation, où les au moins deux bandes de fréquence comprennent une première bande de fréquence et une seconde bande de fréquence qui ont des largeurs de bande de fréquence standard supportant l'accès d'un terminal universel, et où la première bande de fréquence est partiellement chevauchée par la seconde bande de fréquence de telle sorte qu'une largeur de bande de fréquence totale des première et seconde bandes de fréquence corresponde à une largeur de la bande de fréquence entière de la société d'exploitation, le déploiement d'une première cellule et d'une seconde cellule respectivement sur la base de la première bande de fréquence et de la seconde bande de fréquence, où une bande de fréquence, dans laquelle la première bande de fréquence est chevauchée par la seconde bande de fréquence, forme une bande de fréquence chevauchée (110), où la bande de fréquence chevauchée est déployée par un module de déploiement de cellule d'une station de base ; et
l'allocation de ressources de domaine fréquence-temps aux données de la première cellule et de la seconde cellule, comprenant : sur la bande de fréquence chevauchée, l'allocation, par le module d'allocation de ressources de la station de base, des ressources de domaine fréquence-temps aux données de la première cellule et de la seconde cellule d'une manière unie (120), et sur une bande de fréquence de la première bande de fréquence autre que la bande de fréquence chevauchée et sur une bande de fréquence de la seconde bande de fréquence autre que la bande de fréquence chevauchée, l'allocation, par le module d'allocation de ressources de la station de base, des données de la première cellule et les données de la seconde cellule de manière séparée, et l'allocation d'une première ressource de domaine fréquence-temps aux données de la première cellule et une seconde ressource de domaine fréquence-temps aux données de la seconde cellule séparément,
où un point de fréquence centrale d'une sous-porteuse de la première cellule est aligné avec un point de fréquence centrale d'une sous-porteuse correspondante de la seconde cellule sur la bande de fréquence chevauchée.

2. Procédé selon la revendication 1, où l'allocution des ressources de domaine fréquence-temps aux données de la première cellule et de la seconde cellule sur la bande de fréquence chevauchée de manière unie, comprend :
sur la bande de fréquence chevauchée, l'ordonnancement de données utilisateur de la première cellule et de la seconde cellule de manière unie pour partager une ressource de domaine fréquence-temps d'un canal physique partagé de liaison descendante PDSCH, où la ressource de domaine fréquence-temps du PDSCH évite les ressources de domaine fréquence-temps occupées par des signaux de référence et des canaux de commande de la première cellule et de la seconde cellule.

3. Procédé selon la revendication 1, où l'allocution des ressources de domaine fréquence-temps aux données de la première cellule et de la seconde cellule sur la bande de fréquence chevauchée de manière unie, comprend :
sur la bande de fréquence chevauchée, l'ordonnancement de la signalisation d'allocation de ressources de la première cellule et de la seconde cellule de manière unie pour partager une ressource de domaine fréquence-temps d'un canal physique de commande de liaison descendante PDCCH, où la ressource de domaine fréquence-temps du PDCCH évite des ressources de domaine fréquence-temps occupées par des signaux de référence spécifiques à une cellule CRS, des canaux indicateurs de format de commande physique PCFICH, et une demande de répétition automatique hybride physique ARQ, des canaux indicateurs PHICH de la première cellule et de la seconde cellule.

4. Procédé selon la revendication 1, où l'allocution des ressources de domaine fréquence-temps aux données de la première cellule et de la seconde cellule sur la bande de fréquence chevauchée de manière unie, comprend :
sur la bande de fréquence chevauchée, lorsqu'un emplacement de la ressource de domaine fréquence-temps du PHICH de la première cellule est chevauché par un emplacement de la ressource de domaine fréquence-temps du PHICH de la seconde cellule, l'ordonnancement d'une signalisation de réponse ARQ de transmission de liaison montante de la première cellule et de la seconde cellule de manière unie pour partager les ressources de domaine fréquence-temps des PHICH, à un emplacement chevauché où l'emplacement de la ressource de domaine fréquence-temps du PHICH de la première cellule est chevauché par celui de la seconde cellule.

5. Procédé selon la revendication 1, où la division de la bande de fréquence entière possédée par la société d'exploitation en les au moins deux bandes de fréquence avec les largeurs de bande de fréquence standard, comprend :
la sélection d'un nombre de bandes de fréquence divisées, les largeurs de bande de fréquence standard et une largeur de bande de fréquence de la bande de fréquence chevauchée, pour que les ressources de sous-porteuse allouées, selon une manière d'allocution de ressources spécifiée par le système OFDM, à au moins un canal de synchronisation ou un canal de diffusion physique PBCH, de la première cellule, soient différentes de celle de la seconde cellule.

6. Procédé selon la revendication 1, où
la division de la bande de fréquence entière détenue par la société exploitante en au moins deux bandes de fréquence avec les largeurs de bande de fréquence standard, comprend :
la sélection du nombre de bandes de fréquence divisées, les largeurs de bande de fréquence standard et la largeur de bande de fréquence de la bande de fréquence chevauchée, pour que l'allocution des ressources de domaine fréquence-temps sur la bande de fréquence chevauchée selon la manière d'allocation de ressources spécifiée par le système OFDM satisfasse à une ou plusieurs des conditions suivantes :
la ressource de domaine fréquence-temps allouée au PCFICH de la première cellule ne chevauche pas celle de la seconde cellule ;
la ressource de domaine fréquence-temps allouée au PRICH de la première cellule ne chevauche pas celle de la seconde cellule ;
la ressource de domaine fréquence-temps allouée au PRICH de la première cellule ne chevauche pas la ressource de domaine fréquence-temps allouée au PCFICH de la seconde cellule ; et
la ressource de domaine fréquence-temps allouée au PCFICH de la première cellule ne chevauche pas la ressource de domaine fréquence-temps du PRICH de la seconde cellule.

7. Procédé selon la revendication 1, où le déploiement de la première cellule et de la seconde cellule respectivement sur la base de la première bande de fréquence et de la seconde bande de fréquence avec les largeurs de bande de fréquence standard, comprend :
la définition d'identifiants de cellule physique PCI de la première cellule et de la seconde cellule pour rendre un emplacement d'un symbole CRS de la première cellule identique à un emplacement d'un symbole CRS de la seconde cellule dans des sous-porteuses chevauchées.

8. Procédé selon l'une quelconque des revendications 1 à 7, où l'allocation des ressources de domaine fréquence-temps aux données de la première cellule et de la seconde cellule comprend en outre :
sur la bande de fréquence chevauchée, lorsqu'un emplacement de la ressource de domaine fréquence-temps allouée à au moins l'un du canal de commande ou du signal de référence de la première cellule est chevauché par celui de la seconde cellule, la réalisation d'un traitement de conflit, pour sélectionner des données du canal de commande ou du signal de référence de la première cellule ou de la seconde cellule en tant que données à l'emplacement chevauché ;
où le traitement de conflit comprend : sur la bande de fréquence chevauchée, lorsqu'un emplacement de la ressource de domaine fréquence-temps allouée au CRS de la première cellule est chevauché par celui de la seconde cellule, la détermination d'une valeur du CRS à l'emplacement chevauché selon une ou plusieurs des règles suivantes :
une première règle : lorsque le CRS à l'emplacement chevauché est situé sur une sous-porteuse où se trouve le PBCH de la première cellule ou de la seconde cellule, la valeur du CRS à l'emplacement chevauché est déterminée par la cellule à laquelle le PBCH appartient ;
une deuxième règle : lorsqu'un bloc de ressource physique PRB, où le CRS à l'emplacement chevauché est situé, a été alloué à un utilisateur de la première cellule ou de la seconde cellule, la valeur du CRS à l'emplacement chevauché est déterminée par la cellule dont l'utilisateur est alloué au PRB ; et
une troisième règle : lorsqu'une condition d'au moins l'une de la première règle ou de la deuxième règle n'est pas satisfaite, la valeur du CRS à l'emplacement chevauché est déterminée par la première cellule ou la seconde cellule de manière aléatoire ;
ou
où le traitement de conflit comprend :
sur la bande de fréquence chevauchée, lorsque l'emplacement de la ressource de domaine fréquence-temps allouée au PHICH de la première cellule est chevauché par celui de la seconde cellule, la sélection de données PRICH de la première cellule ou de la seconde cellule en tant que données PHICH à l'emplacement chevauché.

9. Procédé selon l'une quelconque des revendications 1 à 8, où, après l'allocation des ressources de domaine fréquence-temps aux données de la première cellule et de la seconde cellule, le procédé comprend en outre :
selon un résultat d'allocation de ressources de domaine fréquence-temps, le mappage des données de la première cellule et de la seconde cellule sur chacune des sous-porteuses d'une bande de fréquence intégrée formée par la première bande de fréquence et la seconde bande de fréquence pour une transmission.

10. Procédé selon l'une quelconque des revendications 1 à 8, où la largeur de bande de fréquence de la bande de fréquence chevauchée est égale à une largeur de bande de fréquence de N blocs de ressources RB, où un RB est une unité minimale pour l'allocation de ressources aux utilisateurs, et N est un entier positif.

11. Station de base d'un système de multiplexage par répartition orthogonale de la fréquence (OFDM), la station de base comprenant :
un module de déploiement de cellule (10), agencé pour déployer une première cellule et une seconde cellule respectivement sur la base d'une première bande de fréquence et d'une seconde bande de fréquence qui ont des largeurs de bande de fréquence standard supportant l'accès d'un terminal universel avec, où la première bande de fréquence et la seconde bande de fréquence sont obtenues en divisant une bande de fréquence entière possédée par une société d'exploitation, et où la première bande de fréquence est partiellement chevauchée par la seconde bande de fréquence de telle sorte qu'une largeur de bande de fréquence totale des première et seconde bandes de fréquence corresponde à une largeur de la bande de fréquence entière de la société d'exploitation, et une bande de fréquence, où la première bande de fréquence est chevauchée par la seconde bande de fréquence, forme une bande de fréquence chevauchée ; et
un module d'allocution de ressources (20), agencé pour allouer des ressources de domaine fréquence-temps à des données de la première cellule et de la seconde cellule, comprenant : sur la bande de fréquence chevauchée, l'allocution, par le module d'allocution de ressources, des ressources de domaine fréquence-temps à des données de la première cellule et de la seconde cellule de manière unie, et sur une bande de fréquence de la première bande de fréquence autre que la bande de fréquence chevauchée et sur une bande de fréquence de la seconde bande de fréquence autre que la bande de fréquence chevauchée, l'allocution, par le module d'allocution de ressources, des données de la première cellule et des données de la seconde cellule de manière séparée, et l'allocution d'une première ressource de domaine fréquence-temps aux données de la première cellule et d'une seconde ressource de domaine fréquence-temps aux données de la seconde cellule séparément,
où un point de fréquence centrale de chaque sous-porteuse de la première cellule est aligné avec un point de fréquence centrale d'une sous-porteuse correspondante de la seconde cellule sur la bande de fréquence chevauchée.
